# EUROPEAN PATENT SPECIFICATION

(11) **EP 2 687 002 B1**
(45) Date of publication and mention of the grant of the patent: **11.03.2015**
(21) Application number: 11708246.1
(22) Date of filing: 14.03.2011
(51) Int. Cl.: H04L 29/12, G06F 17/30

(54) **LDAP operation for multiple directory entries**
LDAP-Operation für mehrere Telefonbucheinträge
Opération LDAP pour de multiples enregistrements d'annuaire

(43) Date of publication of application: 22.01.2014
(73) Proprietor: Telefonaktiebolaget L M Ericsson (PUBL), 164 83 Stockholm (SE)
(72) Inventor: BARTOLOMÉ RODRIGO, Maria Cruz, E-28038 Madrid (ES)
(74) Representative: Pfeifer, Torsten
(86) International application number: PCT/EP2011/053811
(87) International publication number: WO 2012/123016

(56) References cited:
- US-A1- 2005 015 763
- US-B1- 6 980 985
- HARRISON J SERMERSHEIM NOVELL R ET AL: "LDAP v3 Extensions for Bulk Transfer of LDIF Data; draft-rharrison-bulkldif-00.txt", 19990601, 1 June 1999 (1999-06-01), XP015034523, ISSN: 0000-0004

## Description

### Technical Field

The present invention relates to methods and apparatus for implementing Lightweight Directory Access Protocol, LDAP, operations. More particularly, the invention relates to methods and apparatus implementing a LDAP operation for multiple entries within a directory.

### Background

The Lightweight Directory Access Protocol (LDAP) is an open industry standard, defined in IETF RFC 4511, that specifies a standard method for accessing and updating information in a directory. In this context, a directory is usually considered to be a repository or database of information that is optimized to enable the data within the directory to be accessed (i.e. read or searched), under the assumption that data within the directory is accessed much more often than it is updated (i.e. written). LDAP defines the communication protocol used between directory clients and directory servers, wherein a directory client is used to access the directory through a directory server. LDAP is based on the X.500 standard. However, unlike X.500, LDAP supports TCP/IP, which is necessary for any type of Internet access.

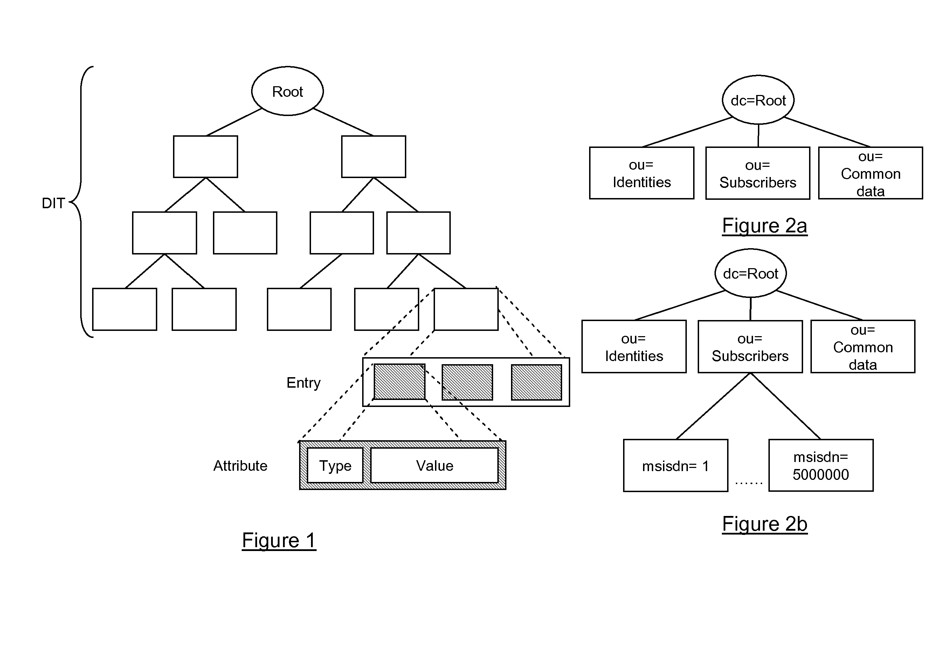

LDAP requires that the data or entries within a directory are structured in a Directory Information Tree (DIT), which is a hierarchical tree-like structure. The top level of this tree-like structure is referred to as the "root", from which a number of branches originate. Each branch in a DIT leads from the root of the DIT to an entry in the directory. An entry consists of a set of attributes, and each attribute has a name (e.g. an attribute type or attribute description) and one or more values. The attributes are defined in a schema. Every entry within the DIT has a distinguished name (DN), which uniquely and unambiguously identifies the entry. The DN of an entry is made up of the DN of its superior (parent) entry, together with specially nominated attribute values (i.e. the distinguished values) from the entry itself. The specially nominated attribute value of an entry is referred to as its relative distinguished name (RDN). As such, each DN is composed of an ordered sequence of RDNs, each separated by a comma (see T-REC-X.501). Figure 1 illustrates an example of a DIT.

LDAP defines various operations that allow a directory client to request that the addition, modification or deletion of an entry be performed on its behalf by a directory server. These operations are implemented when a directory client sends the appropriate request message to a directory server. For example, a directory client may send an Add Request, a Modify Request, a Delete Request, a Modify Distinguished Name Request or a Compare Request message. Such a request message identifies the entry on which the requested operation should be performed using the DN of the entry.

Whilst a single request message can be used to request that operations be implemented for multiple entries, to do so the request message is required to specify a DN for each of the multiple entries. In addition, if any further information/inputs are required in order to implement an operation for multiple entries, then the request will also need to include these inputs be included for each of the multiple entries, even if the inputs are the same for each of the multiple entries. For example, Figure 2a illustrates an example of a DIT with an entry identified as "subscribers". If a user wanted to create 5 million subordinate entries under the "subscribers" entry, as illustrated in Figure 2b, then the directory client is required to specify 5 million DNs and 5 million lists of attributes, even if each new entry has the same immediate superior entry and even if each entry is to contain the same attributes.

This leads to a number of disadvantages. For example, if it is required that an operation be implemented for multiple entries within a DIT, then a huge amount of information must be conveyed from an LDAP Client to an LDAP Server, which also implies that a high bandwidth is required between the LDAP Client and the LDAP Server. In addition, this consumes a large amount of the processing resources available in the LDAP Client and the LDAP Server, especially for the resources used for communication. Furthermore, creating and/or modifying multiple entries in this way is error-prone and very inefficient, as information is repeated for each entry, either within the same message or multiple messages sent between the LDAP Client and the LDAP Server.

As an alternative to the LDAP Add, Modify and Delete operations, data modification, creation, deletion (and renaming) can be achieved using the LDAP Data Interchange Format (LDIF) defined in IETF RFC 2489. LDIF is a file format suitable for describing directory information or modifications made to directory information, and is typically used to import and export directory information between LDAP-based directory servers, or to describe a set of changes which are to be applied to a directory. A LDIF file consists of a series of records separated by line separators, wherein a record consists of a sequence of lines describing a directory entry, or a sequence of lines describing a set of changes to a directory entry. For example, US 2005/015763 discloses a method and system for loading LDIF data into a directory, wherein each entry in the LDIF file is associated with a priority value, wherein the priority value for an entry may be based e.g. on the number of delimiters in the DN within the entry, and wherein multiple loading threads concurrently add the entries into an LDAP directory in accordance with their associated priority values. That is, when used to create or modify multiple entries, LDIF also requires that a record must be specified for each entry, with each record specifying a DN and a list of attributes that are to make up the entry, even if each entry has the same immediate superior entry and even if each entry is to contain the same attributes. Therefore, the use of LDIF also suffers from the same problems as LDAP when creating and/or modifying multiple entries.

### Summary

It is therefore an aim of the present invention to overcome, or at least mitigate, the above-mentioned problems.

The invention is carried out according to the method of independent claim 1 and the apparatuses of independent claims 10 and 15.

According to a first aspect of the present invention there is provided a method of operating a Lightweight Directory Access Protocol, LDAP, directory client. The method comprises, when it is required that an LDAP operation be performed for multiple directory entries, generating a message requesting the LDAP operation, the message specifying how the distinguished name of each of the multiple entries can be determined, and sending the request message to a LDAP directory server. Prior to generating the request message, LDAP directory client may establish how the distinguished name of each of the multiple entries can be determined.

The present invention provides that LDAP operations can be implemented for multiple entries within a directory using a single request message and without the need for the request to include the distinguished name for each of the multiple entries.

The step of generating a message requesting the LDAP operation may comprise including, in the request message, a field specifying how the distinguished name of each of the multiple entries can be determined.

The step of generating a message requesting the LDAP operation may also further comprise generating one or more variation criteria that can be used to determine the distinguished name of each of the multiple entries, and including the one or more variation criteria in the request message. These variation criteria can comprise one or more of logical functions, inequalities, regular expressions, and ranges.

Alternatively, the step of generating a message requesting the LDAP operation may comprise determining a distinguished name of a first entry of the multiple entries, establishing how a distinguished name of each of the remaining multiple entries can be determined from the distinguished name of the first entry, and including, in the request message, the distinguished name of the first entry and information specifying how the distinguished name of each of the remaining multiple entries can be determined from the distinguished name of the first entry. In this case, then the information specifying how the distinguished name of each of the remaining multiple entries can be determined from the distinguished name of the first entry may comprise one or more filter criteria. These variation criteria can comprise one or more of logical functions, inequalities, regular expressions, and ranges.

The operation may be any one of an add entry operation, a modify entry operation, a delete entry operation, a modify distinguished name operation, and a compare entry operation. The request message may be any one of an Add Request, a Modify Request, a Delete Request, a Modify Distinguished Name Request, and a Compare Request.

If the required LDAP operation is an add entry operation, then the method may further comprise generating a list of one or more attributes that are to be included in each of the multiple entries, and including the list of one or more attributes in the request message.

If the required LDAP operation is a modify entry operation, then the method may further comprise generating a list of one or more modifications that are to be made to each of the multiple entries, and including the list of one or more modifications in the request message. The list of one or more modifications can include one or more of the addition of one or more attribute values, the deletion of one or more attribute values, the replacement of one or more attribute values, and the modification of one or more attribute values.

If the required LDAP operation is a modify distinguished name operation, then the method may further comprise establishing how a new distinguished name of each of the multiple entries can be determined, and including information specifying how the new distinguished name of each of the multiple entries can be determined in the request message,

If the required LDAP operation is a compare entry operation, then the method may further comprise generating an attribute value assertion that is to be compared with a value of a particular attribute of each of the multiple entries, and including the attribute value assertion in the request message sent to the LDAP directory server.

According to a second aspect of the present invention there is provided a method of operating an Lightweight Directory Access Protocol, LDAP, directory server. The method comprises receiving a message from a LDAP directory client, the message requesting an LDAP operation and specifying how a distinguished name can be determined for each of multiple directory entries, determining the distinguished name of each of the multiple entries, and implementing the requested operation for each of the multiple entries.

The method may further comprise determining if the message includes a field specifying how a distinguished name can be determined for each of multiple directory entries, and, if so, determining that the requested operation should be performed for each of the multiple directory entries.

The step of determining the distinguished name of each of the multiple entries may further comprise obtaining one or more variation criteria from the request message, and using the one or more variation criteria to determine the distinguished name of each of the multiple entries. These variation criteria can comprise one or more of logical functions, inequalities, regular expressions, and ranges.

Alternatively, the step of determining the distinguished name of each of the multiple entries may comprise obtaining, from the request message, a distinguished name of a first entry of the multiple entries and information specifying how the distinguished name of each of the remaining multiple entries can be determined from the distinguished name of the first entry, and using the information to determine the distinguished name of each of the remaining multiple entries from the distinguished name of the first entry. The information specifying how the distinguished name of each of the remaining multiple entries can be determined from the distinguished name of the first entry from the request message can comprise one or more filter criteria. These variation criteria can comprise one or more of logical functions, inequalities, regular expressions, and ranges.

The method may further comprise sending a response to the LDAP directory client indicating the result of the requested operation.

The operation may be any one of an add entry operation, a modify entry operation, a delete entry operation, a modify distinguished name operation, and a compare entry operation. The request message may be any one of an Add Request, a Modify Request, a Delete Request, a Modify Distinguished Name Request, and a Compare Request.

If the requested LDAP operation is an add entry operation, then the method may further comprise obtaining a list of one or more attributes from the request message, and adding each of the multiple entries to the directory, each of the multiple entries including the one or more attributes obtained from the request message.

If the required LDAP operation is a modify entry operation, then the method may further comprise obtaining a list of one or more modifications from the request message, and performing the one or more modifications on each of the multiple entries. The list of one or more modifications can include one or more of: the addition of one or more attribute values, the deletion of one or more attribute values, the replacement of one or more attribute values, and the modification of one or more attribute values.

If the required LDAP operation is a modify distinguished name operation, then the method may further comprise obtaining information specifying how a new distinguished name of each of the multiple entries can be determined from the request message, using the information to determine a new distinguished name of each of the multiple entries, and modifying the distinguished name of each of the multiple entries.

If the required LDAP operation is a compare entry operation, then the method may further comprise obtaining an attribute value assertion from the request message, and comparing the attribute value assertion with a value of a particular attribute of each of the multiple entries.

According to a third aspect of the present invention, there is provided an apparatus configured to operate as a Lightweight Directory Access Protocol, LDAP, directory client. The apparatus comprises:
an operation request unit for generating a message requesting an LDAP operation and for including in the request message information specifying how a distinguished name can be determined for each of multiple directory entries; and
a transmitter for sending the request message to a LDAP directory server.

The operation request unit may be further configured to include, in the request message, a field specifying how the distinguished name of each of the multiple entries can be determined.

The operation request unit may be further configured to generate one or more variation criteria that can be used to determine the distinguished name of each of the multiple entries, and to include the one or more variation criteria in the request message. The operation request unit may be configured to generate variation criteria that comprise one or more of logical functions, inequalities, regular expressions, and ranges.

Alternatively, the operation request unit may be further configured to determine a distinguished name of a first entry of the multiple entries, establish how a distinguished name of each of the remaining multiple entries can be determined from the distinguished name of the first entry, and include, in the request message, the distinguished name of the first entry and information specifying how the distinguished name of each of the remaining multiple entries can be determined from the distinguished name of the first entry. The operation request unit may be further configured to generate one or more variation criteria that can be used to determine the distinguished name of each of the remaining multiple entries from the distinguished name of the first entry. The operation request unit may be configured to generate variation criteria that comprise one or more of logical functions, inequalities, regular expressions, and ranges.

The operation request unit may be further configured to establish how the distinguished name of each of the multiple entries can be determined.

The operation request unit may be further configured to request an operation that may be any one of an add entry operation, a modify entry operation, a delete entry operation, a modify distinguished name operation, and a compare entry operation. The operation request unit may be further configured to generate a request message that can be any one of an Add Request, a Modify Request, a Delete Request, a Modify Distinguished Name Request, and a Compare Request.

If the LDAP operation is an add entry operation, then the operation request unit may be further configured to generate a list of one or more attributes that are to be included in each of the multiple entries, and to include the list of one or more attributes in the request message.

If the LDAP operation is a modify entry operation, then the operation request unit may be further configured to generate a list of one or more modifications that are to be made to each of the multiple entries, and to include the list of one or more modifications in the request message. The operation request unit may then be configured to generate a list of one or more modifications that can include one or more of: the addition of one or more attribute values, the deletion of one or more attribute values, the replacement of one or more attribute values, and the modification of one or more attribute values.

If the LDAP operation is a modify distinguished name operation, then the operation request unit may be further configured to establish how a new distinguished name of each of the multiple entries can be determined, and include information specifying how the new distinguished name of each of the multiple entries can be determined in the request message.

If the LDAP operation is a compare entry operation, then the operation request unit may be further configured to generate an attribute value assertion that is to be compared with a value of a particular attribute of each of the multiple entries, and include the attribute value assertion in the request message sent to the LDAP directory server.

According to a fourth aspect of the present invention there is provided an apparatus configured to operate as a Lightweight Directory Access Protocol, LDAP, directory server. The apparatus comprises:
a receiver for receiving a message from a LDAP directory client, the message requesting an LDAP operation; and
an operation performance unit for determining if the request message specifies how a distinguished name can be determined for each of multiple directory entries and, if so, for determining the distinguished name of each of the multiple entries and implementing the requested operation for each of the multiple entries.

The operation performance unit may be further configured to determine if the request message includes a field specifying how a distinguished name can be determined for each of multiple directory entries, and, if so, to determine that the requested operation should be performed for each of the multiple directory entries.

The operation performance unit may be further configured to obtain one or more variation criteria from the request message, and use the one or more variation criteria to determine the distinguished name of each of the multiple entries. The operation performance unit may be further configured to use variation criteria that comprise one or more of logical functions, inequalities, regular expressions, and ranges.

Alternatively, the operation performance unit may be configured to obtain, from the request message, a distinguished name of a first entry of the multiple entries from the request message and information specifying how the distinguished name of each of the remaining multiple entries can be determined from the distinguished name of the first entry, and to use the information to determine the distinguished name of each of the remaining multiple entries from the distinguished name of the first entry. The operation performance unit may be further configured to obtain, from the request message, one or more variation criteria that specify how the distinguished name of each of the remaining multiple entries can be determined from the distinguished name of the first entry. The operation performance unit may be further configured to use variation criteria that comprise one or more of logical functions, inequalities, regular expressions, and ranges.

The operation performance unit may be further configured to generate a response to the LDAP directory client indicating the result of the requested operation. The apparatus may further comprise a transmitter for sending the response to the LDAP directory client.

The operation performance unit may be configured to perform an operation that is any one of an add entry operation, a modify entry operation, a delete entry operation, a modify distinguished name operation, and a compare entry operation. The operation performance unit may be configured to process a request message that is any one of an Add Request, a Modify Request, a Delete Request, a Modify Distinguished Name Request, and a Compare Request.

If the requested LDAP operation is an add entry operation, then the operation performance unit may be configured to obtain a list of one or more attributes from the request message, and add each of the multiple entries to the directory, each of the multiple entries including the one or more attributes obtained from the request message.

If the requested LDAP operation is a modify entry operation, then the operation performance unit may be configured to obtain a list of one or more modifications from the request message, and perform the one or more modifications on each of the multiple entries. The operation performance unit may be further configured to perform one or more modifications that can include one or more of: the addition of one or more attribute values, the deletion of one or more attribute values, the replacement of one or more attribute values, and the modification of one or more attribute values.

If the requested LDAP operation is a modify distinguished name operation, then the operation performance unit may be configured to obtain information specifying how a new distinguished name of each of the multiple entries can be determined from the request message, use the information to determine a new distinguished name of each of the multiple entries, and modify the distinguished name of each of the multiple entries.

If the requested LDAP operation is a compare entry operation, then the operation performance unit may be configured to obtain an attribute value assertion from the request message, and compare the attribute value assertion with a value of a particular attribute of each of the multiple entries.

According to a further aspect, there is provided a method of creating multiple entries in a Lightweight Directory Access Protocol, LDAP, directory, the method comprising:
sending a Add Request message to a LDAP directory server, the message specifying how an identifier of each of the multiple entries can be determined and including a single list of one or more attributes that are to make up the content of each of the multiple entries;
determining the identifier of each of the multiple entries; and
creating each of the multiple entries, each entry including the one or more attributes.

### Brief Description of the Drawings

Figure 1 illustrates an example of a the format of a Directory Information Tree;
Figure 2a illustrates an example of a Directory Information Tree;
Figure 2b illustrates the Directory Information Tree of Figure 2a including multiple additional entries;
Figure 3 illustrates schematically an embodiment of a LDAP Client;
Figure 4 illustrates schematically an embodiment of a LDAP Server;
Figure 5 is a flow diagram illustrating an example of the process implemented by a LDAP Client; and
Figure 6 is a flow diagram illustrating an example of the process implemented by a LDAP Server.

### Detailed Description

In order to overcome the limitations identified above there will now be described a method of implementing a LDAP operation for multiple entries within a directory. According to this method, a single request message can be used to implement a LDAP operation for multiple entries, and without the need for the request to include the Distinguished Name for each of the multiple entries. In addition, if any further inputs are required in order to implement the operation, these mechanisms enable the operations to be implemented using only a single set of inputs, or a single set of criteria from which the inputs can be determined, such that the request message does not need to include inputs for each of the multiple entries.

This is achieved by means of an enhancement to the LDAP protocol that enables the LDAP request messages to include a field that specifies how an identifier for multiple entries can be determined. For example, the LDAP protocol could be modified to allow the inclusion of a "variation" field within a request message, the values of the "variation" field defining one or more filter/variation criteria that are to be used to determine the identifier of each of the multiple entries. Alternatively, the values of the "variation" field could define the DN of a first entry and specify how the DN of a number of other entries can be determined from the DN of the first entry. In this way, the "variation" field could be used to indicate the location within the DIT where the new entries are to be created, and indicate how the RDNs identifying the individual entries can be generated. The LDAP Clients would therefore need to be enhanced so as to enable requests messages to be created including this unique field and the appropriate values, and to send request messages containing this field to LDAP Servers. Correspondingly, the LDAP Servers would therefore need to be enhanced to be able to understand and make use of the information conveyed in the "variation" field when it is included within a request message.

By way of example, the Add operation allows a client to request the addition of an entry into the DIT. Conventionally, the Add Request message is defined as:

```
 AddRequest ::= [APPLICATION 8] SEQUENCE {
        entry LDAPDN,
        attributes AttributeList}
```

In the Add Request the value of the "entry" field defines the DN for the entry that is to be created (i.e. the path in the DIT plus the RDN of the new entry), whilst the value of the "attributes" field provides a list of attributes that, along with the RDN, make up the content of the entry being added.

In order to implement this LDAP operation for multiple entries, the Add Request message can be extended to include the "variation" field, such that the enhanced Add Request message is then defined as:

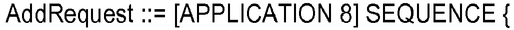

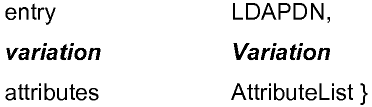

In this enhanced Add Request the value of the "entry" field defines the DN for one of the new entries that is to be created. As such, this DN will identify the path in the DIT and will thereby identify the existing entry that will be the parent of all of the new entries, together with the RDN that will be used as a basis for generating the RDNs of the multiple entries. The "variation" field could then specify how the RDNs of each of the multiple entries can be determined from the RDN that is included as part of the DN in the "entry" field. The value of the "attributes" field again provides a single list of attributes that, along with the RDN, make up the content of each of the multiple entries that are being added.

In order to specify how the DN of each of the multiple entries can be determined, the "variation" field could be defined in a similar way, using a similar syntax to that of the existing LDAP "filter" field. The values of the "filter" field express one or more conditions that an entry shall satisfy in order to be returned as part of the outcome. A filter is therefore expressed in terms of assertions about the presence or value of certain attributes of an entry, and is satisfied if and only if it evaluates to TRUE. For example, the "variation" filed could therefore be defined as:

```
 Variation::= CHOICE {
        and                 [0] SET SIZE (1..MAX) OF var Variation,
        or                  [1] SET SIZE (1..MAX) OF var Variation,
        greaterOrEqual      [2] AttributeValueAssertion,
        lessOrEqual         [3] AttributeValueAssertion,
        ...}
```

These fields correspond to those of the "filter" field and are defined in ITU-T Rec X.511 in combination with ITU-T Rec X.501. The "variation" field can therefore be used to specify how the DN of each of the multiple entries can be determined using any combination of logical functions/operators, inequalities, regular expressions and ranges.

To illustrate the implementation of this method the example described above, in which a user wants to create 5 million subordinate entries under the "subscribers" entry, is reconsidered. In this scenario, the Add Request message could be defined as:

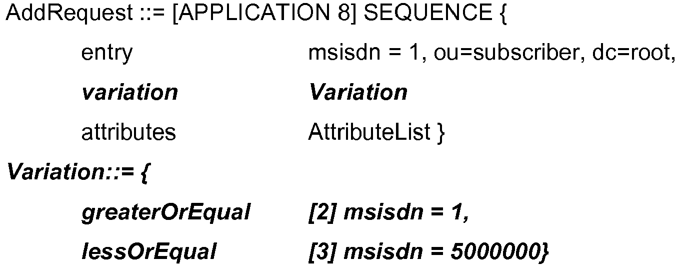

The above is merely provided as an example to illustrate how the "variation" field can be added to an LDAP request message, and how the fields within the "variation" field can be used to define how the DN of each of the multiple entries is to be determined. In practice, LDAP request messages are formulated using the Abstract Syntax Notation One (ASN.1) syntax and notation. This applies to all of the example LDAP request messages defined herein.

In order to correctly implement the operation, the LDAP Server that receives this Add Request message should be configured to interpret this message as requesting the addition/creation of multiple entries in the DIT where the RDN (i.e. MSISDN = 1) is used as the key to create multiple entries with RDNs ranging from MSISDN=1 to MSISDN=5000000. In this example, the father of all of the multiple entries is identified from the value of "entry" field as "ou=subscriber, dc=root".

The methods described above are also equally applicable to other LDAP operations, such as those operations that are used to modify an entry, delete an entry, modify the distinguished name of an entry or compare the value of an attribute in an entry with an assertion value. In order to implement these LDAP operations for multiple entries, the corresponding request messages can be extended to include the "variation" field.

The Modify operation allows a client to request the modification of an entry (e.g. the addition, deletion or replacement of attribute values within an entry) within the DIT. Conventionally, the Modify Request message is defined as:

```
 ModifyRequest ::= [APPLICATION 6] SEQUENCE {
        object LDAPDN,
        changes                 SEQUENCE OF change SEQUENCE {
               operation             ENUMERATED {
                      add            (0),
                      delete         (1),
                      replace        (2),
                      ... },
               modification PartialAttribute}}
```

In order to implement the modification of multiple entries, the Modify Request message can be extended to include the "variation" field, such that the enhanced Modify Request message is then defined as:

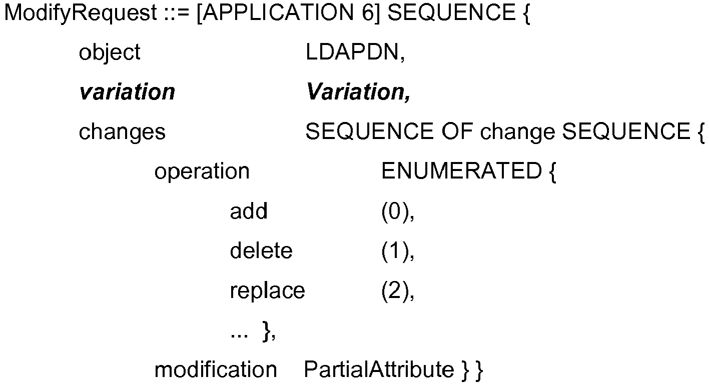

When the "variation" filed is included within the Modify Request, this indicates to an LDAP Server that the modification of the attribute(s) of multiple entries is requested. The value of the "entry" field defines the DN for one of the entries that is to be modified. As such, this DN will identify the path in the DIT and will thereby identify the entry that is the parent of all of the entries that are to be modified, together with the RDN that will be used as a basis for determining the RDNs of the multiple entries. The "variation" field then specifies how the RDNs of each of the multiple entries can be determined from the RDN that is part of the DN specified in the "entry" field. The "changes" field then specifies a single list of modifications that are to be performed on each of the multiple entries. The "operation" field is used to specify the type of modification being performed (e.g. addition, deletion, replacement).

As described above, in order to specify how the DN of each of the multiple entries can be determined, the "variation" field could be defined using a similar syntax to that of the existing LDAP "filter" field. In other words, the "variation" could be defined to include a subset of the options provided in specification for the "filter" field. In this regard, the "variation" can use any combination of logical functions/operators, inequalities, regular expressions and ranges.

By way of example, to illustrate the implementation of the modify entry operation according to the above described method, a scenario is considered in which a user wants to modify 5 million entries under the "subscribers" entry of the DIT illustrated in Figure 2b. In this scenario, the Modify Request message could be defined as:

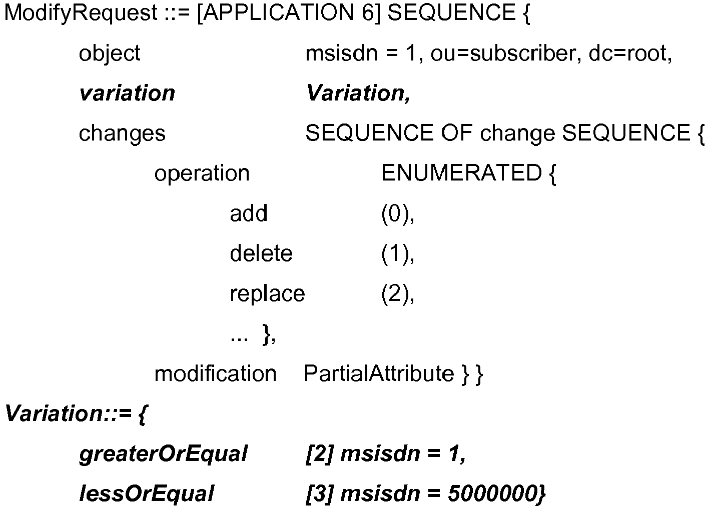

In order to correctly implement the example operation shown above, the LDAP Server that receives this Modify Request message should be configured to interpret this message as requesting the modification of multiple entries in the DIT where the RDN (i.e. MSISDN = 1) is used as the key to define the multiple entries as having RDNs ranging from MSISDN=1 to MSISDN=5000000.

As a further example, a Modify Request message might also be defined as: 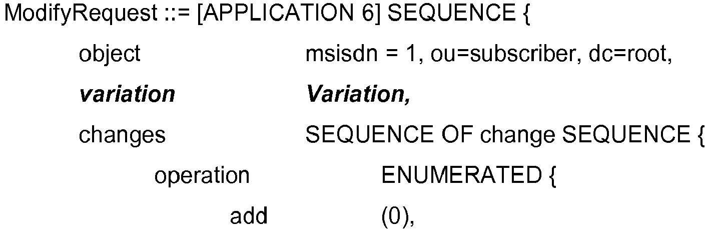 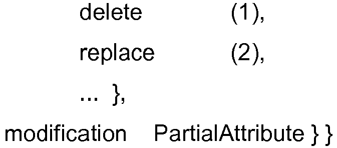 ***Variation::= {and greaterOrEqual 2000000 lessOrEqual 5000000}***

In order to correctly implement the example operation given above, the LDAP Server that receives this Modify Request message should be configured to interpret this message as requesting the modification of multiple entries in the DIT where the RDN (i.e. MSISDN) is used as the key to define the multiple entries as having RDNs ranging from MSISDN=2000000 to MSISDN=5000000, whilst also requiring modification of the individual entry identified in the "object" field (i.e. MSISDN=1). As such, an operation would be performed for the specific entry whose DN is included in the request (e.g. identified in the "entry" or "object" field), and for any other entries whose DNs are determined by applying the criteria given in the "variation" field to the DN included in the request.

The Delete operation allows a client to request the removal of an entry from the Directory. Conventionally, the Delete Request is defined as:
DelRequest ::= [APPLICATION 10] LDAPDN

In order to implement the deletion of multiple entries, the Delete Request message can be extended to include the "variation" field, such that the enhanced Delete Request message is then defined as:

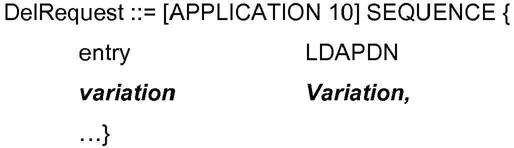

When the "variation" filed is included within the Delete Request, this indicates to an LDAP Server that the deletion of multiple entries is requested. The value of the "entry" field defines the DN for one of the entries that is to be deleted. As such, this DN will identify the path in the DIT and will thereby identify the entry that is the parent (e.g. ou=subscriber, dc=root) of all of the entries that are to be deleted, together with the RDN that will be used as a basis for determining the RDNs of the multiple entries.

The "variation" field then specifies how the RDNs of each of the multiple entries can be determined from the RDN that is part of the DN specified in the "entry" field.

As described above, in order to specify how the DN of each of the multiple entries can be determined, the "variation" field could be defined in a similar way to the existing LDAP "filter" field, using any combination of logical functions/operators, inequalities, regular expressions and ranges.

By way of example, to illustrate the implementation of the delete entry operation according to the above described method, a scenario is considered in which a user wants to delete 5 million entries under the "subscribers" entry. In this scenario, the Delete Request message could be defined as:

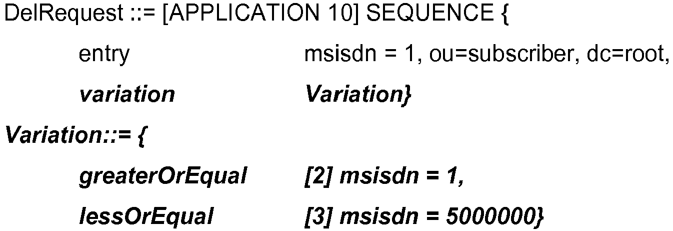

In order to correctly implement the operation the LDAP Server that receives this Delete Request message should be configured to interpret this message as requesting the deletion of multiple entries in the DIT where the RDN (i.e. MSISDN = 1) is used as the key to define the multiple entries as having RDNs ranging from MSISDN=1 to MSISDN=5000000.

The Modify DN operation allows a client to change the RDN of an entry in the Directory and/or to move a subtree of entries to a new location in the Directory. Conventionally, the Modify DN Request is defined as:

```
 ModifyDNRequest ::= [APPLICATION 12] SEQUENCE {
        entry               LDAPDN,
        newrdn              RelativeLDAPDN,
        deleteoldrdn        BOOLEAN,
        newSuperior         [0] LDAPDN OPTIONAL }
```

In order to implement the modify DN operation for multiple entries, the Modify DN Request message can be extended to include the "variation" field, such that the enhanced Modify DN Request message is then defined as:

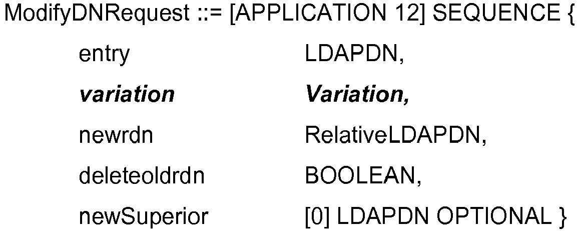

In the Modify DN Request, the "variation" field specifies how the RDNs of each of the multiple entries can be determined from the RDN that is included as part of the DN in the "entry" field. If the Modify DN Request is being used to move multiple entries to a new location in the Directory, then the value of the "newSuperior" field defines the DN of an existing entry that is to become the immediate superior (parent) of the multiple entries. If the Modify DN Request is being used to change the RDN of multiple entries then the "variation" field can also be used to determine the new RDN of each of the multiple entries. To do so, the value of the "newrdn" field could be used to define the new RDN of the entry whose DN is defined in the "entry" field. The "variation" field could then also be used to determine the new RDNs of each of the multiple entries from the RDN that is specified in the "newrdn" field.

Alternatively, the ModifyDNRequest message could be extended further to include an additional field that specifies how the new RDNs of each of the multiple entries are to be determined.

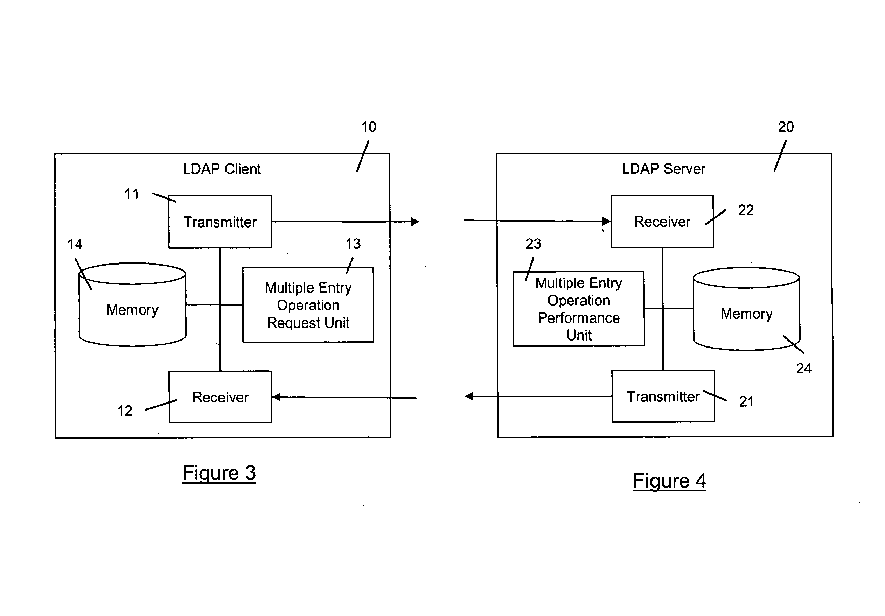

Figure 3 illustrates schematically an embodiment of a LDAP Client 10 configured to perform the methods described above. The LDAP Client 10 can be implemented as a combination of computer hardware and software and comprises a transmitter 11, a receiver 12, a multiple entry operation request unit 13, and a memory 14. The multiple entry operation request unit 13 may be provided by programs/executable files that are stored in the memory 14 and implemented by a processor. The memory 14 stores any configuration information that is pre-configured into the LDAP Client 10 together with any additional data or information that is required by the LDAP Client 10.

Figure 4 illustrates schematically an embodiment of a LDAP Server 20 configured to perform the methods described above. The LDAP Server 20 can be implemented as a combination of computer hardware and software and comprises a transmitter 21, a receiver 22, a multiple entry operation performance unit 23, and a memory 24. The multiple entry operation performance unit 23 may be provided by programs/executable files that are stored in the memory 24 and implemented by a processor, and may be part of an LDAP protocol implementation unit (not shown). The memory 24 stores any configuration information that is pre-configured into the LDAP Server 20 together with any additional data or information that is required by the LDAP Server 20.

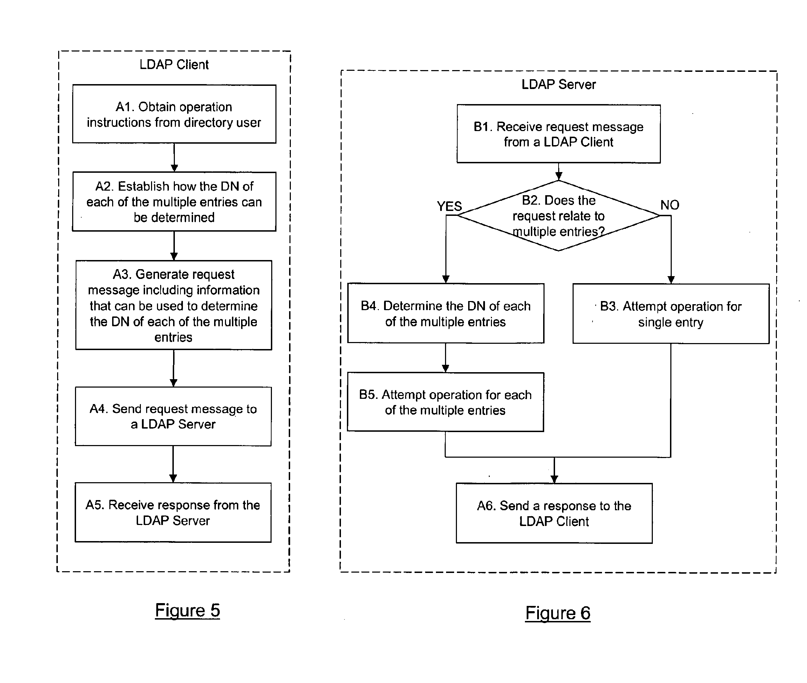

Figure 5 is a flow diagram illustrating an example of the process implemented by a LDAP Client. The steps performed are as follows:
A1. A directory user (e.g. a person, or computer program) requires that an operation be performed in relation to multiple directory entries. For example, this operation can be an add entry operation, a modify entry operation, a delete entry operation, a modify distinguished name operation, or a compare entry operation. The LDAP Client interacts with the directory user in order to obtain information regarding the required operation and the multiple entries for which the operation should be performed.
A2. The LDAP Client therefore establishes how the distinguished name of each of the multiple entries can be determined. For example, the LDAP Client may accept inputs from the directory user that explicitly define how the distinguished name of each of the multiple entries can be determined. Alternatively, the LDAP Client may accept inputs from the directory user that require the LDAP Client to automatically determine how the distinguished name of each of the multiple entries can be determined. As a result, the LDAP Client generates information that can be used to determine the distinguished name of each of the multiple entries. For example, the LDAP Client may generate a set of variation criteria , namely those previously referred to as included in the "variation" field, that can be used to determine the distinguished name of each of the multiple entries.
A3. The LDAP Client then generates a message requesting the LDAP operation, and includes the information that can be used to determine the distinguished name of each of the multiple entries. Depending upon the type of operation, the LDAP Client may be required to include additional information in the request message. By way of example, if the required operation is an add entry operation, then the LDAP Client is required to generate a list of one or more attributes that are to be included in each of the multiple entries and to include the one or more attributes in the request message. By way of further example, if the required operation is a modify entry operation, then the LDAP Client is required to generate a list of one or more modifications that are to be made to each of the multiple entries and to include the one or more modifications in the request message.
A4. The LDAP Client then sends the request message to a LDAP Server.
A5. The LDAP Client will then receive a response from the LDAP Server indicating the result of the requested operation.

Figure 6 is a flow diagram illustrating an example of the process implemented by a LDAP Server. The steps performed are as follows:
B1. The LDAP Server receives a message from a LDAP Client requesting an LDAP operation. For example, this operation can be an add entry operation, a modify entry operation, a delete entry operation, a modify distinguished name operation, or a compare entry operation.
B2. The LDAP Server determines if the message includes information specifying how a distinguished name can be determined for multiple directory entries. For example, the LDAP Server can determine if the message includes a field that has been defined for this purpose. If the message does not include such information, then the process proceeds to step B3. If the message does include such information, then the process proceeds to step B4.
B3. If the message does not include such information, then the LDAP Server attempts to perform the requested operation for a single entry whose distinguished name is given in the request message. The process then proceeds to step B6.
B4. The LDAP Server then uses the information included within the request message to determine the distinguished name of each of the multiple entries. For example, the information may comprise one or more variation criteria , namely those in the "variation" field, that can be used to determine the distinguished name of each of the multiple entries.
B5. The LDAP Server then attempts to perform the requested operation for each of the multiple entries. By way of example, if the requested operation is an add entry operation, then the LDAP Server can obtain a list of one or more attributes from the request message, and attempt to add each of the multiple entries to the directory, each of the multiple entries including the one or more attributes obtained from the request message. By way of further example, if the required LDAP operation is a modify entry operation, then the LDAP Server can obtain a list of one or more modifications from the request message, and attempt to perform the one or more modifications on each of the multiple entries.
B6. The LDAP Server then generates a response indicating the result of the operation and sends the response to the LDAP Client.

As described above, the information included within a request message that specifies how a DN can be determined for each of the multiple entries can take a similar format to that of the existing LDAP "filter" field, such that this information is provided to the LDAP Server as one or more expressions or functions, that are referred to as variation criteria. These can therefore specify how the DN of each of the multiple entries can be determined using logical functions, inequalities, regular expressions, and ranges. By way of example, a request message could provide regular expression in the form of a DN including one or more wildcards or variable characters (e.g. 5948790, where '?' denotes a wildcard or variable character). This DN can then be used as a basis for determining the DN of each of the multiple entries. By way of further example, a request message could provide regular expression in the form of a DN including one or more wildcards or variable characters, and define a subset of all of the possible characters that can be substituted for each of those wildcards or variable characters (e.g. 849xyz, where 4<x<7; 1 <y<8; 5<z<8).

In order to identify the multiple entries for which a requested operation is to be performed, the filtering/search functionality defined for the conventional LDAP Search Request could be used to find/identify one or more entries to which the variation criteria are to be applied. By way of example, in order to implement the modification of multiple entries, the Modify Request message could be defined as:

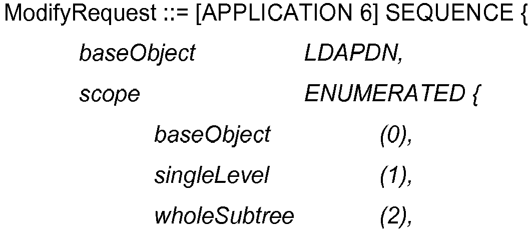

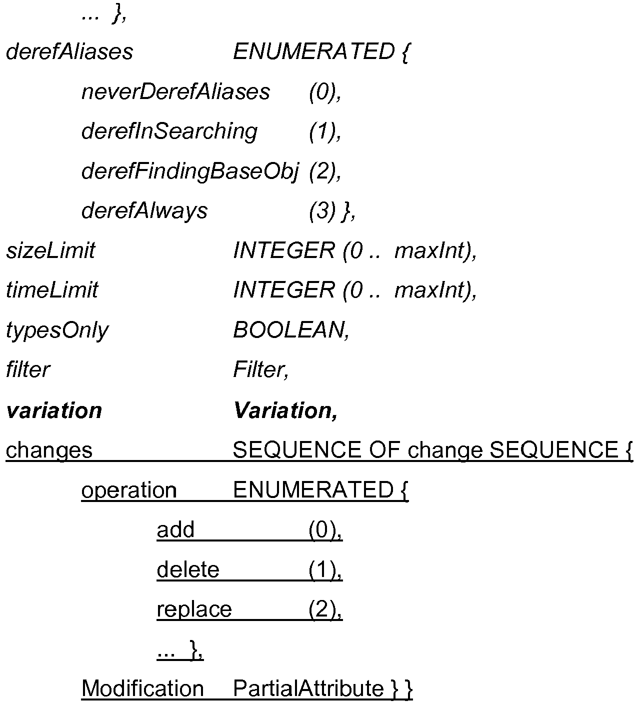

Those fields given in italics provide the filtering/search functionality of the conventional LDAP Search Request. Those fields that are underlined provide the modification functionality of the conventional LDAP Modify Request. The "variation" field can function so as to specify how the RDNs of each of the multiple entries can be determined from the DNs of the entries identified using the filter/search criteria.

In order to correctly implement such an operation, the LDAP Server that receives a request message that includes both filtering/search criteria and variation criteria should be configured to interpret this message as requesting that this operation be performed for multiple entries. The LDAP Server should be configured to identify the multiple entries by using the filtering/search criteria to identify one or more entries, and then apply the variation criteria to the one or more identified entries.

The methods and apparatus described above provide that LDAP operations can be implemented for multiple entries within a directory using a single request message and without the need for the request to include the Distinguished Name for each of the multiple entries. In addition, if any further inputs are required in order to implement the operation, these mechanisms enable the operations to be implemented using only a single set of inputs, or a single set of variation criteria from which the inputs can be determined, such that the request message does not need to include inputs for each of the multiple entries.

The methods and apparatus described above are therefore particularly useful when initially creating multiple entries with default values. For example, using conventional technology, when initially adding subscribers into a subscriber database that is part of a telecommunications network, the subscribers must be added to the database on an individual (i.e. one-by-one) basis. The methods and apparatus described above would simplify this initial provisioning by allowing multiple subscribers to be added into the database using a single message that includes only the minimum information.

Furthermore, it is particularly advantageous that the methods and apparatus described above minimise the information that must be conveyed between an LDAP Client and an LDAP Server in order to implement an operation for multiple entries, as the bandwidth provided between LDAP Clients and LDAP Servers is typically minimised. This also minimises the processing burden placed on the LDAP Clients and LDAP Servers. Moreover, the methods and apparatus described above also improve the consistency of the data in a directory, by removing the need for the same data to be entered numerous times, a process which is particularly error-prone.

It will be appreciated by the person of skill in the art that various modifications may be made to the above-described embodiments without departing from the scope of the present invention. For example, whilst the above embodiments have been described as making use of existing LDAP messages that have been extended/enhanced to enable LDAP operations to be requested for multiple entries using a single message, these methods could equally be implemented using new messages that are explicitly defined for this purpose.

## Claims

1. A method of operating a Lightweight Directory Access Protocol, LDAP, directory client, the method comprising:
when it is required that an LDAP operation be performed for multiple directory entries:
generating a message requesting the LDAP operation, the message specifying how the distinguished name of each of the multiple entries can be determined; and
sending the request message to an LDAP directory server.

2. A method as claimed in claim 1, wherein the step of generating a message requesting the LDAP operation comprises:
including, in the request message, a field specifying how the distinguished name of each of the multiple entries can be determined.

3. A method as claimed in any preceding claim, wherein the step of generating a message requesting the LDAP operation further comprises:
generating one or more variation criteria that can be used to determine the distinguished name of each of the multiple entries; and
including the one or more variation criteria in the request message.

4. A method as claimed in any of claims 1 or 2, wherein the step of generating a message requesting the LDAP operation comprises:
determining a distinguished name of a first entry of the multiple entries;
establishing how a distinguished name of each of the remaining multiple entries can be determined from the distinguished name of the first entry; and
including the distinguished name of the first entry and information specifying how the distinguished name of each of the remaining multiple entries can be determined from the distinguished name of the first entry in the request message.

5. A method as claimed in claim 4, wherein the step of generating a message requesting the LDAP operation further comprises:
generating one or more variation criteria that can be used to determine the distinguished name of each of the remaining multiple entries from the distinguished name of the first entry; and
including the one or more variation criteria in the request message.

6. A method of operating a Lightweight Directory Access Protocol, LDAP, directory server, the method comprising:
receiving a message from an LDAP directory client, the message requesting an LDAP operation and specifying how a distinguished name can be determined for each of multiple directory entries;
determining the distinguished name of each of the multiple entries; and
implementing the requested operation for each of the multiple entries.

7. A method as claimed in claim 6, the method further comprising:
determining if the message includes a field specifying how a distinguished name can be determined for each of multiple directory entries; and
if so, determining that the requested operation should be performed for each of the multiple directory entries.

8. A method as claimed in any of claims 6 or 7, wherein the step of determining the distinguished name of each of the multiple entries comprises:
obtaining one or more variation criteria from the request message; and
using the one or more variation criteria to determine the distinguished name of each of the multiple entries.

9. A method as claimed in any of claims 6 or 7, wherein the step of determining the distinguished name of each of the multiple entries comprises:
obtaining a distinguished name of a first entry of the multiple entries from the request message;
obtaining, from the request message, information specifying how the distinguished name of each of the remaining multiple entries can be determined from the distinguished name of the first entry; and
using the information to determine the distinguished name of each of the remaining multiple entries from the distinguished name of the first entry.

10. An apparatus configured to operate as a Lightweight Directory Access Protocol, LDAP, directory client, the apparatus comprising:
an operation request unit for generating a message requesting an LDAP operation and for including in the request message information specifying how a distinguished name can be determined for each of multiple directory entries; and
a transmitter for sending the request message to an LDAP directory server.

11. An apparatus as claimed in claim 10, wherein the operation request unit is further configured to:
include, in the request message, a field specifying how the distinguished name of each of the multiple entries can be determined.

12. An apparatus as claimed in any of claim 10 or 11, wherein the operation request unit is further configured to:
generate one or more variation criteria that can be used to determine the distinguished name of each of the multiple entries; and
include the one or more variation criteria in the request message.

13. An apparatus as claimed in any of claim 10 or 11, wherein the operation request unit is further configured to:
determine a distinguished name of a first entry of the multiple entries;
establish how a distinguished name of each of the remaining multiple entries can be determined from the distinguished name of the first entry; and
include, in the request message, the distinguished name of the first entry and information specifying how the distinguished name of each of the remaining multiple entries can be determined from the distinguished name of the first entry.

14. An apparatus as claimed in claim 13, wherein the operation request unit is further configured to:
generate one or more variation criteria that can be used to determine the distinguished name of each of the remaining multiple entries from the distinguished name of the first entry; and
include the one or more variation criteria in the request message.

15. An apparatus configured to operate as a Lightweight Directory Access Protocol, LDAP, directory server, the apparatus comprising:
a receiver for receiving a message from an LDAP directory client, the message requesting an LDAP operation;
an operation performance unit for determining if the request message specifies how a distinguished name can be determined for each of multiple directory entries and, if so, for determining the distinguished name of each of the multiple entries and implementing the requested operation for each of the multiple entries.

16. An apparatus as claimed in claim 15, wherein the operation performance unit is further configured to:
determine if the request message includes a field specifying how a distinguished name can be determined for each of multiple directory entries, and, if so, to determine that the requested operation should be performed for each of the multiple directory entries.

17. An apparatus as claimed in any of claims 15 or 16, wherein the operation performance unit is further configured to:
obtain one or more variation criteria from the request message; and
use the one or more variation criteria to determine the distinguished name of each of the multiple entries.

18. An apparatus as claimed in any of claims 15 or 16, wherein the operation performance unit is further configured to:
obtain a distinguished name of a first entry of the multiple entries from the request message;
obtain, from the request message, information specifying how the distinguished name of each of the remaining multiple entries can be determined from the distinguished name of the first entry; and
use the information to determine the distinguished name of each of the remaining multiple entries from the distinguished name of the first entry.

## Patentansprüche

1. Verfahren zum Betreiben eines Leichtgewichts-Verzeichniszugriffsprotokoll, LDAP, - Verzeichnisclients, wobei das Verfahren umfasst:
wenn es erforderlich ist, dass eine LDAP-Operation für mehrere Verzeichniseinträge durchgeführt wird:
Erzeugen einer Nachricht, welche die LDAP-Operation anfordert, wobei die Nachricht spezifiziert, wie der Unterscheidungsname jedes der mehreren Einträge bestimmt werden kann; und
Senden der Anforderungsnachricht an einen LDAP-Verzeichnisserver.

2. Verfahren nach Anspruch 1, wobei der Schritt des Erzeugens einer Nachricht, welche die LDAP-Operation anfordert, umfasst:
Aufnehmen eines Feldes in die Anforderungsnachricht, das spezifiziert, wie der Unterscheidungsname jedes der mehreren Einträge bestimmt werden kann.

3. Verfahren nach einem der vorhergehenden Ansprüche, wobei der Schritt des Erzeugens einer Nachricht, welche die LDAP-Operation, anfordert, ferner umfasst:
Erzeugen eines oder mehrerer Variationskriterien, die zum Bestimmen des Unterscheidungsnamens jedes der mehreren Einträge verwendet werden; und
Aufnehmen des einen Variationskriteriums oder der mehreren Variationskriterien in die Anforderungsnachricht.

4. Verfahren nach Anspruch 1 oder 2, wobei der Schritt des Erzeugens einer Nachricht, welche die LDAP-Operation anfordert, umfasst:
Bestimmen eines Unterscheidungsnamens eines ersten Eintrags der mehreren Einträge;
Festlegen, wie ein Unterscheidungsname jedes der restlichen mehreren Einträge aus dem Unterscheidungsnamen des ersten Eintrags bestimmt werden kann; und
Aufnehmen des Unterscheidunganamens des ersten Eintrags und von Informationen, die spezifizieren, wie der Unterscheidungsname jedes der restlichen mehreren Einträge aus dem Unterscheidungsnamen des ersten Eintrags bestimmt werden kann, in die Anforderungsnachricht.

5. Verfahren nach Anspruch 4, wobei der Schritt des Erzeugens einer Nachricht, welche die LDAP-Operation anfordert, ferner umfasst:
Erzeugen eines oder mehrerer variationskriterien, die zum Bestimmen des Unterscheidungsnamens jedes der restlichen mehreren Einträge aus dem Unterscheidungsnamen des ersten Eintrags verwendet werden können; und
Aufnehmen des einen Variationskriteriums oder der mehreren Variationskriterien in die Anforderungsnachricht.

6. Verfahren zum Betreiben eines Leichtgewichts-Verzeichniszugriffsprotokoll, LDAP, - Verzeichnisservers, wobei das Verfahren umfasst:
Empfangen einer Nachricht von einem LDAP-Verseichnisclient, wobei die Nachricht eine LDAP-Operation anfordert und spezifiziert, wie ein Unterscheidungsname für jeden von mehreren Verzeichniseinträgen bestimmt werden kann;
Bestimmen des Unterscheidungsnamens jedes der mehreren Einträge; und
Implementieren der angeforderten Operation für jeden der mehreren Einträge.

7. Verfahren nach Anspruch 6, wobei das ferner Verfahren umfasst:
Bestimmen, ob die Nachricht ein Feld umfasst, das spezifiziert, wie ein Unterscheidungsname für jeden von mehreren verzeichniseinträgen bestimmt werden kann; und
wenn dies der Fall ist: Bestimmen, , dass die angeforderte Operation für jeden der mehreren Verzeichniseinträge durchgeführt werden sollte .

8. Verfahren nach einem der Ansprüche 6 oder 7, wobei der Schritt des Bestimmens des Unterscheidungsnamens jedes der mehreren Einträge umfasst:
Erhalten eines oder mehrerer Variationskriterien aus der Anforderungsnachricht; und
Verwenden des einen Variationskriteriums oder der mehreren Variationskriterien zum Bestimmen des Unterscheidungsnamens jedes der mehreren Einträge.

9. Verfahren nach einem der Ansprüche 6 oder 7, wobei der Schritt des Bestimmens des Unterscheidungsnamens jedes der mehreren Einträge umfasst:
Erhalten eines Unterscheidungsnamens eines ersten Eintrags der mehreren Einträge aus der Anforderungsnachricht;
Erhalten aus der Anforderungsnachricht von Informationen, die spezifizieren, wie ein Unterscheidungsname jedes der restlichen mehreren Einträge aus dem Untersheidungsnamen des ersten Eintrags bestimmt werden kann; und
Verwanden der Informationen, um den Unterscheidungsnamen jedes der restlichen mehreren Einträge aus dem Unterscheidungsnamen des ersten Eintrags zu bestimmten.

10. Vorrichtung, die so konfiguriert ist, dass sie als Leichtgewichts-verzeichniszugriffsprotokoll, LDAP, - Verzeichnisclient funktioniert, wobei die Vorrichtung umfasst::
eine Operationsanforderungseinheit zum Erzeugen einer Nachricht, die eine LDAP-Operation anfordert, und zum Aufnehmen von Informationen in die Anforderungsnachricht, die spezifizieren, wie ein Unterscheidungsname für jeden von mehreren - Verzeichniseinträgen bestimmt werden kann; und
einen Sender zum Senden der Anforderungsnachricht an einen LDAP-Verseichnisserver.

11. Vorrichtung nach Anspruch 10, wobei die Operationsanforderungseinheit ferner konfiguriert ist zum:
Aufnehmen eines Feldes in die Anforderungsnachricht, das spezifiziert, wie der Uhterscheidungsname jedes der mehreren Einträge bestimmt werden kann.

12. Vorrichtung nach einem der Ansprüche 10 oder 11, wobei die Operationsanforderungseinheit ferner konfiguriert ist zum:
Erzeugen eines oder mehrerer Variationskriterien, die zum Bestimmen des Unterscheidungsnamens jedes der mehreren Einträge verwendet-werden können; und
Aufnehmen des einen Variationskriteriums oder der mehreren Variationskriterien in die Anforderungsnachricht.

13. Vorrichtung nach einem der Ansprüche 10 oder 11, wobei die Operationsanforderungseinheit ferner konfiguriert ist zum:
Bestimmen eines Unterscheidungsnamens eines ersten Eintrags der mehreren Einträge;
Festlegen, wie ein Unterscheidungsname jedes der restlichen mehreren Einträge aus dem Unterscheidungsnamen des ersten Eintrags bestimmt werden kann; und
Aufnehmen des Unterscheidungsnamens des ersten Eintrags und von Informationen, die spezifizieren, wie der Unterscheidungsname jedes der restlichen mehreren Einträge aus dem Unterscheidungsnamen des ersten Eintrags bestimmt werden kann, in die Anforderungsnachricht.

14. Vorrichtung nach Anspruch 13, wobei die Operationsanforderungseinheit ferner konfiguriert ist zum:
Erzeugen eines oder mehrerer Variationskriterien, die zum Bestimmen des Unterscheidungsnamens jedes der restlichen mehreren Einträge aus dem Unterscheidungsnamen des ersten Eintrags verwendet werden können; und
Aufnehmen des einen Variationskriteriums oder der mehreren Variationskriterien in die Anforderungsnachricht.

15. Vorrichtung, die so konfiguriert ist, dass sie als Leichtgewichts-Verzeichniszugriffsprotokoll, LDAP,- Verzeichnisserver funktioniert, wobei die Vorrichtung umfasst:
einen Empfänger zum Empfangen einer Nachricht von einem LDAP-Verzeichnisclient, wobei die Nachricht eine LDAP-Operation anfordert;
eine Operationsdurchführungseinheit zum Bestimmen, ob die Anforderungsnachricht spezifiziert, wie ein Unterscheidungsname für jeden von mehreren Verzeichniseinträgen bestimmt werden kann, und, wenn dies der Fall ist, zum Bestimmen des Unterscheidungsnamens jedes der mehreren Einträge und Implementierten der angeforderten Operation für jeden der mehreren Einträge.

16. Vorrichtung nach Anspruch 15 wobei die Operationsdurchführungseinheit ferner konfiguriert ist zum:
Bestimmen, ob die Anforderungsnachricht ein Feld umfasst, das spezifiziert, wie ein Unterscheidungsname für jeden von mehreren Verseichniseinträgen bestimmt werden kann, und, wenn dies der Fall ist, zum Bestimmen, dass die angeforderte Operation, für jeden der mehreren Verzeichniseinträge durchgeführt werden sollte.

17. Vorrichtung nach einem der Ansprüche 15 oder 16, wobei die Opertionsanforderungseinheit ferner konfiguriert ist zum:
Erhalten eines oder mehrerer Variationskriterien aus der Anforderungsnachricht; und
Verwenden des einen Variationskriteriums oder der mehreren Variationskriterien zum Bestimmen des Unterscheidungsnamens jedes der mehreren Einträge.

18. Vorrichtung nach einem der Ansprüche 15 oder 16, wobei die Operationsanforderungseinheit ferner konfiguriert ist zum:
Erhalten eines Unterscheidungsnamens eines ersten Eintrags der mehreren Einträge aus der Anforderungsnachricht;
Erhalten aus der Anforderungsnachricht von Informationen, die spezifizieren, wie ein Ünterscheidungsname jedes der restlichen mehreren Einträge aus dem Unterscheidungsnamen des ersten Eintrags bestimmt werden kann; und
Verwenden der Informationen, um den Unterscheidungsnamen jedes der restlichen mehreren Einträge aus dem Unterscheidungsnamen des ersten Eintrags zu bestimmen.

## Revendications

1. Procédé de fonctionnement d' un client d'annuaire à protocole d'accès à l'annuaire ultraléger LDAP, le procédé comprenant de :
quand il est nécessaire qu'une opération LDAP soit effectuée pour des entrées d'annuaire multiples ;
générer un message demandant l'opération LDAP, le message spécifiant comment le nom distingué de chacune des entrées multiples peut être déterminé ; et
envoyer le message de demande à un serveur d'annuaire.

2. Procédé selon la revendication 1, dans lequel l'étape de génération d'un message demandant l'opération LDAP, comprend de :
inclure, dans le message de demande, un champ spécifiant comment le nom distingué de chacune des entrées multiples peut être déterminé.

3. Procédé selon une quelconque des revendications précédentes, dans lequel l'étape de génération d'un message demandant l'opération LDAP comprend en outre de :
générer un ou plusieurs critères de variation qui peuvent être utilisés pour déterminer le nom distingué de chacune des entrées multiples ; et
inclure le ou les critères de variation dans le message de demande.

4. Procédé selon une quelconque des revendications 1 ou 2, dans lequel l'étape de génération d'un message demandant l'opération LDAP comprend de :
déterminer un nom distingué d'une première entrée des entrées multiples ;
établir comment un nom distingué de chacune des entrées multiples restantes peut être déterminé à partir d'un nom distingué de la première entrée ; et
inclure le nom distingué de la première entrée et une information spécifiant comment le nom distingué de chacune des entrées multiples restantes peut être déterminé à partir du nom distingué de la première entrée dans le message de demande.

5. Procédé selon la revendication 4, dans lequel l'étape de génération d'un message demandant l'opération LDAP comprend en outre de ;
générer un ou plusieurs critères de variation qui peuvent être utilisés pour déterminer le nom distingué de chacune des entrées multiples restantes à partir du nom distingué de la première entrée ; et
inclure le ou les critères de variation dans le message de demande.

6. Procédé de fonctionnement d'un client d'annuaire à protocole d'accès à l'annuaire ultraléger LDAP, le procédé comprenant de :
recevoir un message provenant d'un client d'annuaire LDAP, le message demandant une opération LDAP et spécifiant comment un nom distingué peut être déterminé pour chacune des entrées de directoire multiples ;
déterminer le nom distingué de chacune des entrées multiples ; et
implémenter l'opération demandée pour chacune des entrées multiples.

7. Procédé selon la revendication 6, le procédé comprenant en outre de :
déterminer si le message inclut un champ spécifiant comment un champ distingué peut être déterminé pour chacune des entrées d'annuaire multiples; et
si c'est le cas, déterminer que l'opération demandée devrait être effectuée pour chacune des entrées d'annuaire multiples.

8. Procédé selon une quelconque des revendications 6 ou 7, dans lequel l'étape de détermination du nom distingué de chacune des entrées multiples comprend de ;
obtenir un ou plusieurs critères de variations à partir du message de demande; et
utiliser le ou les critères de variation pour déterminer le nom distingué de chacune des entrées multiples.

9. Procédé selon une quelconque des revendications6 ou 7, dans lequel l'étape de détermination du nom distingué de chacune des entrées multiples comprend de :
obtenir un nom distingué d'une première entrée des entrées multiples à partir du message de demande ;
obtenir, à partir du message de demande, une information spécifiant comment le nom distingué de chacune des entrées multiples restantes peut être déterminé à partir du nom distingué de la première entrée ; et
utiliser l'information pour déterminer le nom distingué de chacune des entrées multiples restantes à partir du nom distingué de la première entrée.

10. Dispositif configuré pour fonctionner comme un client d'annuaire à protocole d'accès à l'annuaire ultraléger LDAP, le dispositif comprenant ;
une unité de demande d'opération pour générer un message demandant une opération LDAP et pour inclure dans le message de demande une information spécifiant comment un nom distingué peut être déterminé pour chacune des entrées d'annuaire multiples ; et
un émetteur pour envoyer le message de demande vers un serveur d'annuaire LDAP.

11. Dispositif selon la revendication 10, dans lequel l'unité de demande opération est en outre configurée pour
inclure, dans le message de demande, un champ Spécifiant comment le nom distingué de chacune des entrées multiples peut être déterminé.

12. Dispositif selon une quelconque des revendications de 10 ou 11, dans lequel l'unité de demande opération est en outre configurée pour :
générer un ou plusieurs critères de variation qui peuvent être utilisés pour déterminer le nom distingué de chacune des entrées multiples ; et
inclure le ou les critères de variation dans le message de demande.

13. Dispositif selon une quelconque des revendications de 10 ou 11, dans lequel l'unité de demande opération est en outre configurée pour.:
déterminer un nom distingué d'une première entrée des entrées multiples ;
établir comment un nom distingué de chacune des entrées multiples restantes peut être déterminé à partir d'un nom distingué de la première entrée ; et
inclure le nom distingué de la première entrée et une information spécifiant comment le nom distingué de chacune des entrées multiples restantes peut être déterminé à partir du nom distingué de la première entrée dans le message de demande.

14. Dispositif selon la revendication 13, dans lequel l'unité de demande opération est en outre configurée pour :
générer un ou plusieurs critères de variation qui peuvent être utilisés pour déterminer le nom distingué de chacune des entrées multiples ; et
inclure le ou les critères de variation dans le message de demande.

15. Dispositif configuré pour fonctionner comme un client d'annuaire à protocole d'accès à l'annuaire ultraléger LDAP, le dispositif comprenant :
un récepteur pour recevoir un message provenant d'un client d'annuaire LDAP, le message demandant une opération LDAP ;
une unité de mise en oeuvre d'opération pour déterminer si le message de demande spécifie comment un nom distingué peut être déterminé pour chacune des entrées d'annuaire multiples et si c'est le cas, pour déterminer le nom distingué de chacune des entrées multiples et implémenter l'opération demandée pour chacune des entrées multiples.

16. Dispositif selon la revendication 15, dans lequel l'unité de mise en oeuvre de performance est en outre configurée pour ;
déterminer si le message inclut un champ spécifiant comment un champ distingué peut être déterminé pour chacune des entrées d'annuaire multiples et si c'est le cas, déterminer que l'opération demandée devrait être effectuée pour chacune des entrées d'annuaire multiples.

17. Dispositif selon une quelconque des revendications 15 ou 16, dans lequel l'unité de mise en oeuvre de performance est en outre configurée pour :
obtenir un ou plusieurs critères de variations à partir du message de demande; et
utiliser le ou les critères de variation pour déterminer le nom distingué de chacune des entrées multiples.

18. Dispositif selon une quelconque des revendications 15 ou 16, dans lequel l'unité de mise en oeuvre de performance est en outre configurée pour
obtenir un nom distingué d'une première entrée des entrées multiples à partir du message de demande ;
obtenir, à partir du message de demande, une information spécifiant comment le nom distingué de chacune des entrées multiples restantes peut être déterminé à partir du nom distingué de la première entrée ; et
utiliser l'information pour déterminer le nom distingué de chacune des entrées multiples restantes à partir du nom distingué de la première entrée.
